Europäisches Patentamt

(19) European Patent Office

Office européen des brevets

(11) Publication number: **0 252 160**
**A1**

(12) **EUROPEAN PATENT APPLICATION**
published in accordance with Art. 158(3) EPC

(21) Application number: **87900695.5**

(22) Date of filing: **12.01.87**

Data of the international application taken as a basis:

(86) International application number:
**PCT/JP87/00018**

(87) International publication number:
**WO87/04266 (16.07.87 87/15)**

(30) Priority: **14.01.86 JP 4225/86**
**27.12.86 JP 311751/86**

(43) Date of publication of application:
**13.01.88 Bulletin 88/2**

(84) Designated Contracting States:
**BE DE FR GB**

(71) Applicant: **POLAROID CORPORATION**
**549 Technology Square**
**Cambridge, Massachusetts 02139(US)**

(51) Int. Cl.³: **G 03 B 27/32**

(72) Inventor: **ISHIKAWA, Masahiro**
**13-23, Akashicho**
**Hiratsuka-shi Kanagawa 254(JP)**

(72) Inventor: **SUZUKI, Shigeru**
**440, Moro-okacho**
**Kohoku-ku, Yokohama-shi Kanagawa 222(JP)**

(72) Inventor: **YANAGAWA, Nobuyuki**
**4-15-60, Nakakaigan**
**Chigasaki-shi Kanagawa 253(JP)**

(72) Inventor: **ICHIMURA, Hajime**
**Purinsu Vira 201 3-28-19, Minamisenzoku**
**Ota-ku Tokyo 145(JP)**

(72) Inventor: **MANO, Hiroshi**
**2-4-Bto-606, Minamiono**
**Ichikawa-shi Chiba 272(JP)**

(74) Representative: **Skone James, Robert Edmund et al,**
**GILL JENNINGS & EVERY 53-64 Chancery Lane**
**London WC2A 1HN(GB)**

(54) **IMAGE FORMING DEVICE.**

(57) An image forming device which comprises a single original support, a source of light for illuminating an original placed thereon, a means for selectively guiding the reflected light from the original illuminated by the source of light to one of the two optical paths, optical focusing systems provided on the two optical paths to focus the light reflected from the original, and holding means for detachably holding two kinds of photosensitive members of dissimilar sizes on the focusing positions of the two optical focusing systems, wherein the image is selectively formed on one of said two kinds of photosensitive materials, such that a color negative for projection having any of the above-mentioned dissimilar sizes.

F I G. 9

SPECIFICATION


IMAGE FORMING APPARATUS


TECHNICAL FIELD

The present invention relates to an image forming apparatus for forming an image of an original on a diapositive for projection.


BACKGROUND ART

In various lecture meetings, scientific publication assemblies and others, charts, photographs and the like are projected as enlarged onto a screen by using a slide projector and an overhead projector as a means for aiding explanation.

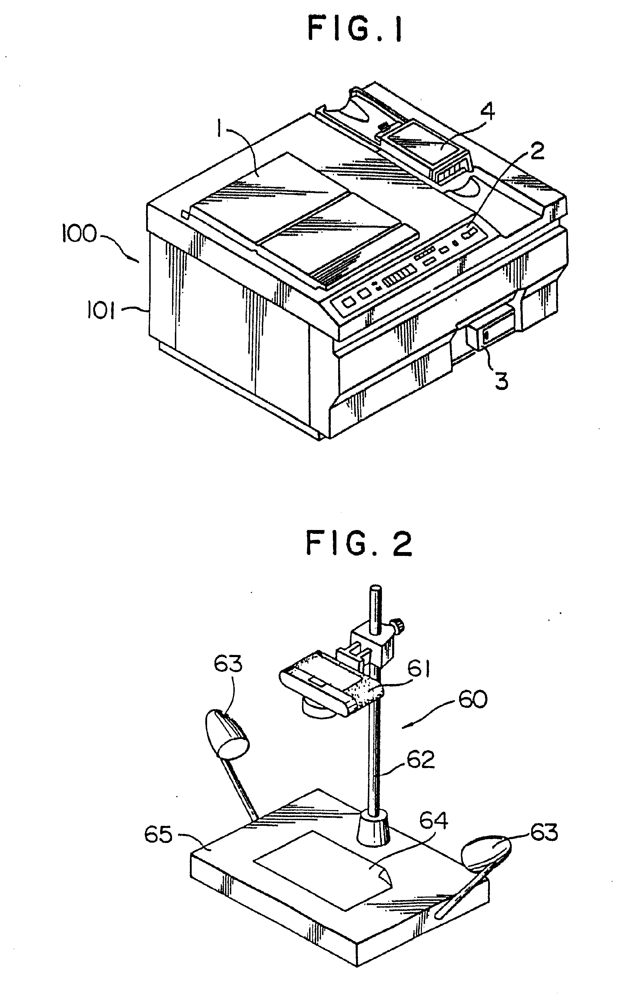

For preparation of a slide from an original, it has heretofore been a common practice that a 35-mm camera 61 is fixedly mounted on a supporting column 62 of a two-piece stand 60 in a disposition facing downwardly, as is shown in Fig. 2, wherein an original 64 disposed on a table plate 65 of the two-piece stand with the surface carrying an image facing upwardly is illuminated with a light source 63 such as a projection lamp or stroboscopic flash lamp and the image is taken by operating a shutter of the camera 61. In that case, operator has to adjust the height of the camera 61 mounted on the supporting column 62 in dependence on the size of the original 64, adjust the focus and determine the shutter speed, aperture value in consideration of the type of the original, the type of the light source and brightness. This procedure requires skillfulness, and it has been difficult to obtain a slide which can be used satisfactorily unless the operator is accustomed to handle the camera.

On the other hand, a diapositive for projection by an overhead projector has heretofore been prepared by coping an original image onto a transparent sheet by using an electro-photographic copying machine. With this procedure, however, only the image in black and white can be obtained. In recent years, color image enjoys higher popularity in the CRT display for a computer or the like, not to speak of television and photograph. The projected image in black and white is poor in impression.

Recently, a variety of instant slide films have been proposed which allow color slides to be prepared immediately after photographing by simplifying the development process. A color instant film pack suited for the application mentioned above is commercially available which allows a color diapositive for the overhead projector to be

- 2 -

prepared in a simplified manner. However, for using this film pack, an expensive camera destined for use only with this film pack is necessary. Besides, troublesome procedure is required as in the case of the aforementioned photographing procedure for the preparation of slide by copying the original.

An object of the present invention is to eliminate the aforementioned shortcomings of the hitherto known method of preparing a 35-mm slide by copying an original and a color diapositive for an overhead projector and provide an image forming apparatus which is capable of preparing the 35-mm slide film as well as diapositive for an overhead projector by using an instant film pack in a facilitated manner through a simplified manipulation as in the case of a copying machine.

DISCLOSURE OF THE INVENTION

For accomplishing the object mentioned above, the image forming apparatus according to the present invention is characterized in that the apparatus comprises a single original supporting portion, a light source for illuminating an original disposed on said portion, means for introducing light reflected by the original illuminated by the aforementioned light source selectively to one of two optical paths, focusing optical systems disposed in the aforementioned two optical paths, respectively, for focusing the light reflected by the original, and holding means for holding removably two types of light-sensitive materials having sizes differing from each other at focusing positions of the two focusing optical systems, respectively, wherein image is formed selectively on either one of the aforementioned two types of light-sensitive materials.

BRIEF DESCRIPTION OF DRAWINGS

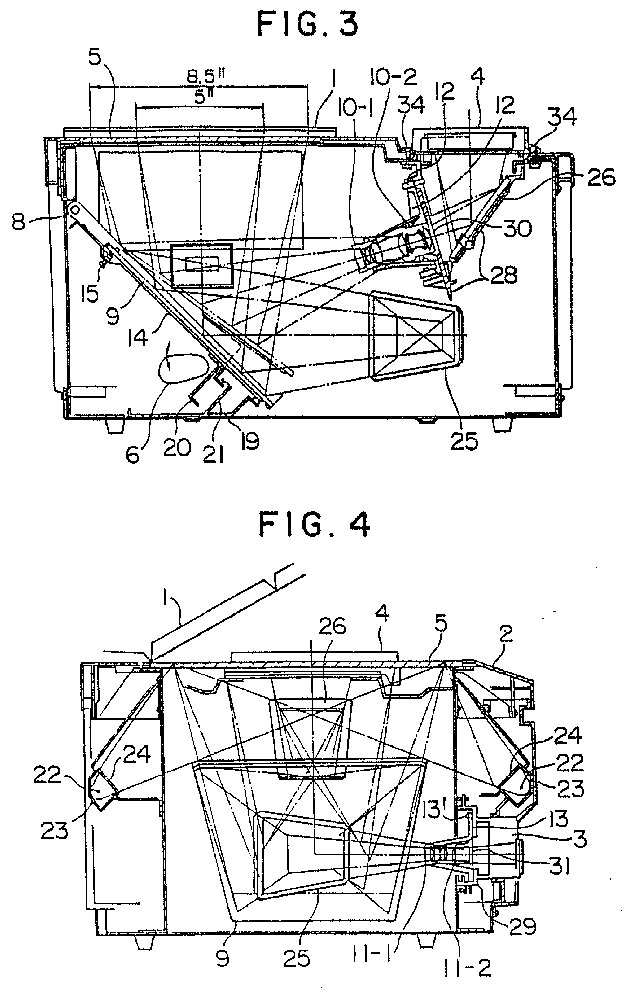

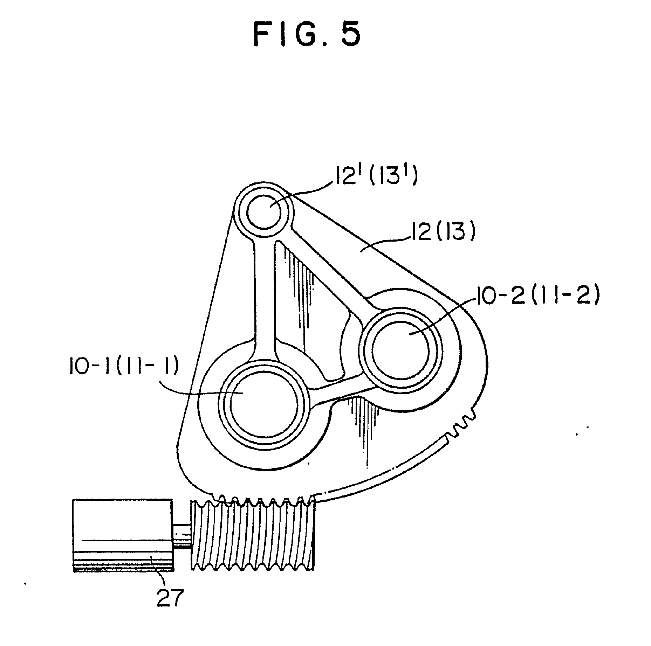

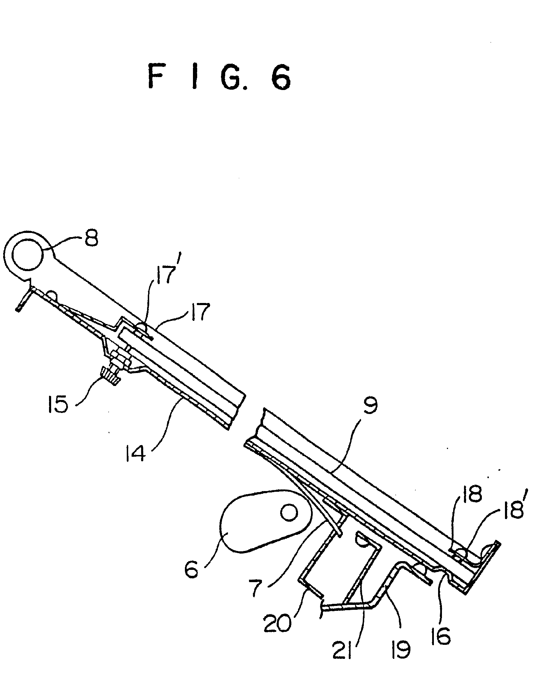

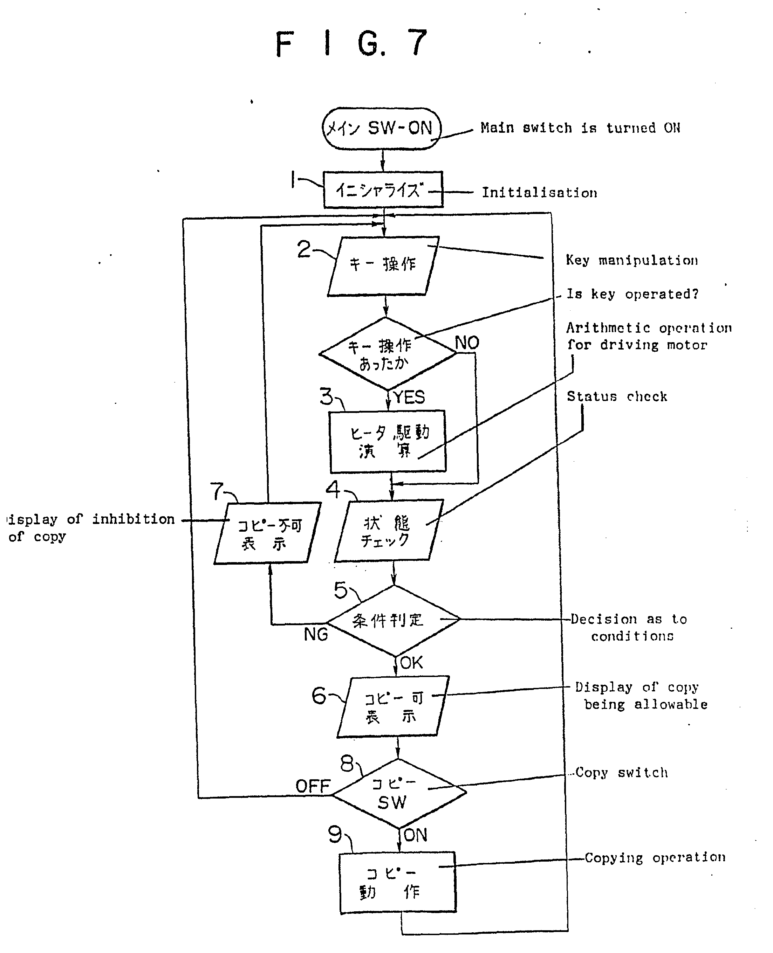

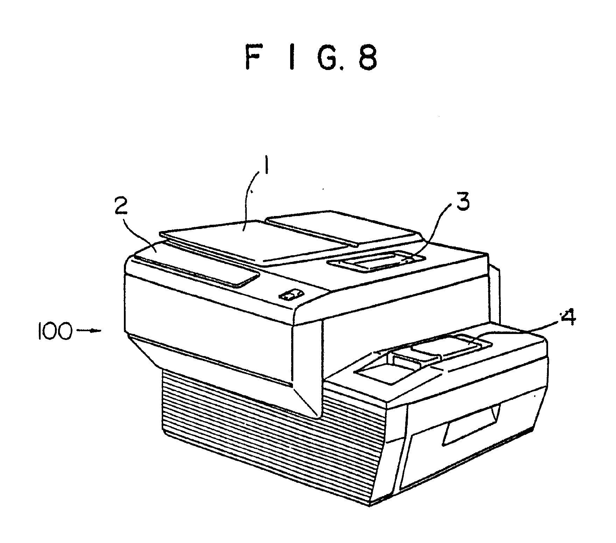

Fig. 1 is a perspective view showing an outer appearance of the apparatus according to a first embodiment of the present invention, Fig. 2 is a perspective view showing an example of hitherto known apparatus for preparing a diapositive for a slide by means of a 35-mm camera, Figs. 3 and 4 are sectional views of the embodiment shown in Fig. 1 taken from the front side and a lateral side, respectively, Fig. 5 is a front view showing a turret apparatus for changing over focusing lenses in dependence on the sizes of originals, Fig. 6 is a side view showing a mirror displacing apparatus for changing-over of optical paths, Fig. 7 shows a flow chart for illustrating schematically operation of the embodiment, and Figs. 8, 9 and 10 are, respectively, a perspective view, a front sectional view and a side sectional view of a second embodiment of the present invention.

- 4 -

BEST MODE FOR CARRYING OUT THE INVENTION

A first embodiment of the present invention will be explained hereinafter with reference to the accompanying drawings.

Fig. 1 is a perspective view showing an outer appearance of the image forming apparatus according to an exemplary embodiment of the present invention, and Figs. 3 and 4 are sectional views of the same as viewed from the front side and the left side, respectively.

A main body 100 of the apparatus is formed as an obscura box in which a contact glass plate 5 for supporting an original disposed thereon is provided on a top plate of the casing of the obscura, while an original pressing plate 1 for holding down the original disposed on the contact glass plate is pivotally mounted on a casing ceiling plate at the rear end of the original pressing plate 1. A manipulation portion 2 is provided in front of the contact glass plate 5. A 35-mm film loading portion 3 is provided in a front wall of the casing 101, while a holder 4 for an instant film pack is removably installed on the top plate of the casing 101 at the right side to the contact glass plate 5.

The original disposed on the contact glass plate 5 is illuminated over the whole surface by means of two flash lamps 22 provided on the front side and rear side below
the contact glass plate 5, as is shown in Fig. 4.  For
assuring uniform illumination over the original surface,
the flash lamp 22 is provided with a reflector plate 23 and
a collecting and diffusing filter (stepped concave or convex
lens such as Fresnel lens) 24.

Disposed between the contact glass plate 5 on
one hand and a 35-mm film and a film within a film pack on
the other hand is a focusing optical system having exchangeable
optical paths for focusing reflected light from the original
illuminated by the flash lamps 22 selectively onto either
the 35-mm film loaded in the aforementioned 35-mm film
loading portion or the film within the film pack loaded in
the instant film pack holder 4.  Referring to Fig. 3, this
optical system includes a first mirror 9 which is swingable
at the upper end thereof about a supporting stud 8 between
a position shown in a solid line and a position shown in a
broken line, a second mirror 25 disposed in the optical
path of the light reflected from the original when the first
mirror 9 is located at the solid line position, lenses 11-1
and 11-2 disposed in the optical path (shown in Fig. 4) for
the light reflected by the second mirror 25 for focusing
the image on a surface of the 35-mm film, and lenses 10-1
and 10-2 and a third mirror 26 disposed in the optical path for the reflection light shown in a broken line in Fig. 3
for focusing the image onto the film within the film pack
when the first mirror 9 is at the position indicated by
the broken line.

In the apparatus according to this embodiment,
there can be used two types of originals having sizes of
8.5" x 11" (215.9 mm x 279.4 mm) and 5" x 7" (127 mm x
177.8 mm) (approximating to a B6 size, a 4 x 6 size and a
cabinet size in a 2L-size color print). For focusing the
image of the original fully over the 35-mm film and the
film of the instant film pack, respectively, there are
provided so as to be exchangeably inserted in the respective
optical paths the two pairs of lenses 10-1, 10-2 and 11-1,
11-2 having respective focal lengths differing from each
other in the two optical paths.

Referring to Fig. 5 which is a view showing an
example of a lens changing-over apparatus, the lenses 10-1,
10-2 and 11-1, 11-2 are mounted on turrets 12 and 13 having
a sector-like shape and rotatable about shafts 12' or 13',
respectively, wherein each turret has a worm gear formed
in an arcuate portion and meshing with a worm rotated by a
motor 27. Thus, by rotating the motor 27 in either one of
the directions, either the lenses 10-1, 10-2 or 11-1, 11-2
are selectively inserted in the optical path. For indexing

- 7 -

the angular position of the turrets 12, 13, a stopper
(not shown) is provided adjustably in respect to the
position. Further, each lens is so mounted on the associated
turret as to be finely adjustable in the direction coinciding
with the optical path and thus can be adjusted to focus the
image on the film with accuracy.

The turrets 12, 13 are moved slideably in contact
with light shield members 28, 29 for protecting the film
from exposure to light. Further, shutters 30 and 31 are
installed, respectively, in the optical paths on the side
of the turrets facing the films. The shutter 30, 31 is
so controlled that upon actuation of a start switch provided
in the manipulating portion 2, the flash lamps 22 are fired
after the shutter has been opened completely, the shutter
beginning to be closed upon completion of the flashing,
as in the case of operation of the shutter at the time of
flashing of the strobo lamp in the photographic camera.

Although the turrets are employed for the change-
over operation in view of the fact that two types of
originals differing from each other in respect to the size
are employed with two different magnification powers usable
for each type of the film and hence four different magnifications available in total in the case of the illustrated
embodiment, it is also possible to use a zoom lens and a

- 8 -

0252160

conversion lens so that a greater variety of the original sizes can be dealt with.

Next, a mechanism for changing-over the position of the first mirror 9 and operation thereof will be described by referring to Fig. 6.

The first mirror 9 is disposed on an adjusting screw 15 and a protrusion 16 provided on a mirror bracket 14 having an upper end 8 supported on the machine frame and is fixedly secured by means of spring members 17 and 18 with interposition of elastic members 17' and 18' at positions opposing to the screw 15 and the protrusion 16, respectively. Disposed on the lower surface of the mirror bracket 14 is a leaf spring 7 having one end portion spaced freely from the mirror bracket 14 so as to be engageable with a cam 6 driven by a motor not shown adapted to be rotated by actuating a film selecting key switch provided on the manipulating portion 2. When the 35-mm film is selected, the cam 6 is set to the state disengaged from the leaf spring 7, whereby the mirror 9 is indexed under the dead weight to such a position at which the lower surface of the mirror bracket 14 bears against the upper end of a stopper 19 secured to the machine frame and the reflection light is directed to the 35-mm film. When the film pack is selected, the cam 6 is rotated to push upwardly the leaf spring 7, as the result of which the mirror 9 is rotated upwardly about the supporting stud 8, while a hook portion of the lever 20 mounted on the lower surface of the mirror bracket 14 resiliently bears against a stopper 21 secured to the machine frame under the action of the leaf spring 7, whereby the mirror 9 is set to such a position at which the light reflected from the mirror 9 is directed to the film pack.  Adjustment of the first mirror 9 with respect to the position and the angle of the mirror 9 positioned stationarily can be effected by means of two adjusting screws 15 located at front and rear sides, respectively, and through adjustment of the positions at which the stoppers 19 and 20 are mounted on the machine frame.

The second mirror 25 and the third mirror 26 need not be changed in respective positions.  The second mirror 25 is spaced from the 35-mm film, wherein a lens is disposed between the mirror and the film surface.  For this reason, the second mirror 25 is supported adjustably in respect to the position.  The third mirror 26 is positioned by means of the light shield member 28 secured to the film pack positioning member and equipped with no adjusting means in view of the short distance from the film surface.

By virtue of such arrangement that two optical paths are exchangeably provided for the light reflected from

- 10 -

the original, as described above, the procedure for exchanging the film pack holder 4 and the 35-mm film loading portion is rendered unnecessary. Besides, because two of the four lenses can be disposed in each of the optical paths, mounting of the lens can be realized in a facilitated manner while the overall size of the apparatus is reduced, whereby the apparatus can be realized in a compact structure.

Further, since the range of magnification to be covered by one lens can be narrowed even in the case where the zoom lenses are employed, the lens may be of a small size. Further, the lens length in the direction of the optical axis can be decreased. Thus, the apparatus can be implemented in a compact structure.

It should be mentioned that the 35-mm roll film loading portion 3 and the film pack holder 4 can be used not only for the film for preparation of the slide or the film for the overhead projector but also for other types of films for copying the original image so far as the latter are of same sizes as the former.

By virtue of such arrangement that by selecting the film to be copied by means of the film selecting key switch provided on the manipulating portion 2, the first mirror 9 is displaced to the predetermined position associated with the selected film, while the shutter provided in the

- 11 -

optical path for the selected film, the mechanism required for the image formation such as setting of sensitivity in correspondence to that of the film and others and the film feeding mechanism are set to the state ready for operation, erroneous operation can be effectively prevented.

Besides, by providing a monitor having a mount of the same configuration as that of the mount of the film pack holder 4 and equipped with a focusing glass in a plane corresponding to that of the film so that the monitor can be exchangeably mounted in place of the film pack holder 4, it becomes possible to assertain the position at which the original is set and contraction ratio for the projection. This arrangement is advantageous particularly in such application where a part of an original is to be copied for preparing a diapositive for the projection.

The sensitivity of the films used in the illustrated apparatus can vary within an extremely wide range as exemplified by ISO (ASA) 1 to 400 films and ISO 3000 in the case of black and white printing paper having an ultra-high sensitivity. With the automatic exposure mechanism (AE mechanism) employed in the conventional photographic camera, it is impossible to ensure the proper value of exposure over such wide range of sensitivity. For realizing the proper exposure, the quantity of light illuminating the original

0252160

must be determined by utilizing as parameters the contraction ratio for projection, effective aperture value of lens and sensitivity of the film.

This can be accomplished in the case where a flash lamp is employed as the light source by combination of:

1.  control of discharge voltage,

2.  changing-over of discharging charger capacitors, and

3.  control of the discharge duration.

Further, by combining the insertion of an ND filter in the luminous flux and the variability of the lens diaphragm in the most economical manner, the films having sensitivity variable over a wide range can be processed.

When adjustment of the quantity of light is performed in correspondence with the film sensitivity by combining appropriately these various means mentioned above, need for the lens diaphragm such as the one used in the photographic camera and the shutter of a complicated structure with shutter speed varying over a wide range can be eliminated, whereby the apparatus can be implemented in a simplified structure inexpensively.

Fig. 7 shows schematically in a flow chart a procedure for copying an original image on a film with the apparatus according to the illustrated embodiment.

When a main switch is closed,

- 13 -

①     Initialization is effected to set the apparatus to the initial state with the capacitor for firing a flash lamp beginning to be charged.

②     Subsequently, through key manipulation,

(a)   setting of the original size,

(b)   selection of the film to be used (35-mm film or film pack),

(c)   setting of the film light sensitivity, and

(d)   fine adjustment of the quantity of light, if necessary, are performed.

③     In accordance with the key manipulations mentioned above, the motor for the first mirror 9 and the motor for changing over the lenses are driven and additionally the quantity of light as demanded in dependence on the film sensitivity is arithmetically determined for correspondingly varying the parameters for the means for fine adjustment of light quantity.

④     Next, status checks mentioned below are performed.

(a)   Has charging of the capacitor been completed?

(b)   Has the lens change-over been realized?

(c)   Has the change-over of the first mirror been realized?

(d)   Is the pressing plate closed?

Further, in dependence on whether the 35-mm film or the film pack is selected, following checks are performed.

A. When the 35-mm film is selected;

(a) Is the film loaded?

(b) Is the rear cover of the loading portion closed?

(c) Is film yet available for each type as loaded?

(d) Has the film loading been completed?

B. When the film pack is selected;

(a) Has the pack holder been set?

(b) Is the light shield plate opened?

(c) Has the used film been extracted?

Among the checks mentioned above, those checks (a) to (d) in the case A and (a) to (c) in the case B may be omitted in consideration of the balance with the costs involved. Of course, various checks may be performed in addition to those mentioned above.

(5)　　　When the results of the checks performed at (4) have proven to be satisfactory,

(6)　　　"Copying is allowable" is displayed. On the other hand, when the result of any one of the checks is found dissatisfactory,

(7)　　　"Copying is inhibited" and other messages as required are displayed, whereupon the key manipulation at (2) is regained. When it is found at (6) that the copy is allowable,

(8)　　　decision is made as to whether the copy button is ON or OFF.

When it is ON,

(9)    A predetermined copying operation is performed and upon completion thereof the step (2) is regained.  Unless the copy button is ON, correction of the conditions can be readily performed through the key manipulation at the step (2).

"Next, a second exemplary embodiment of the present invention will be described by referring to Figs. 8 to 10.  In these figures, those members having same functions as those of the first exemplary embodiment described above are attached with same symbols.  The following description is made with emphasis being put on the difference from the first exemplary embodiment.

Fig. 8 is a perspective view showing an outer appearance of the image forming apparatus according to the second exemplary embodiment which is essentially similar to the first exemplary embodiment except that the 35-mm roll film loading portion 3 is disposed at the top of the apparatus in conjunction with the disposition of the optical system described hereinafter.

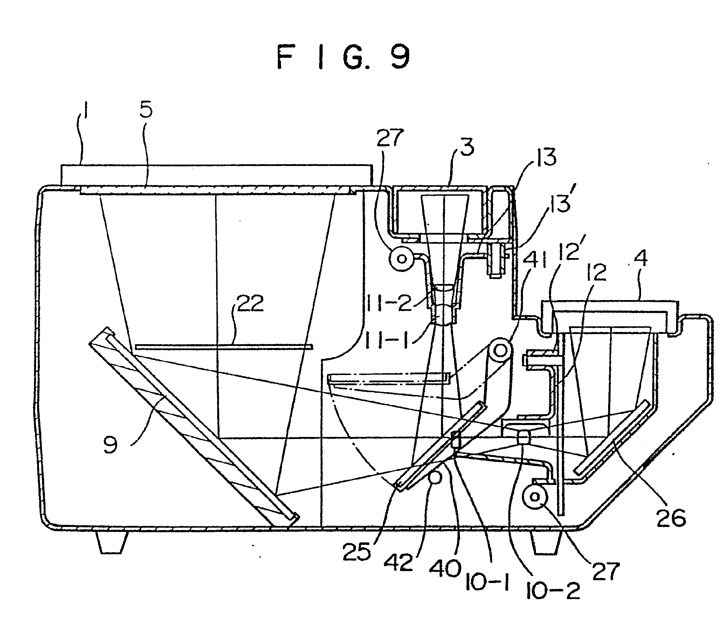

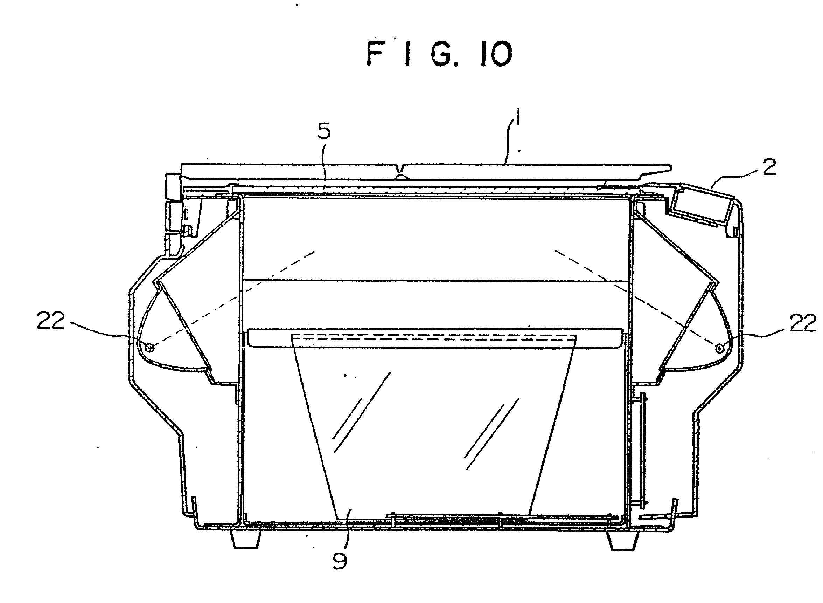

Figs. 9 and 10 are sectional views of the apparatus taken, respectively, along vertical planes orthogonal to each other.  In the optical system according to the instant exemplary embodiment, the first mirror 9 is fixedly secured

- 16 -

at an invariable position, wherein the reflected light from the original disposed on the contact glass plate 5 and illuminated by the flash lamp 22 is reflected in a predetermined direction by means of the first mirror 9. For changing over the traveling path of this reflected light exchangeably between two optical paths leading to the 35-mm film loaded in the 35-mm film loading portion 3 and the film within the film pack loaded in the instant film pack holder 4, respectively, a second mirror 25 is so disposed that it can be inserted and retracted in and form the optical path of reflected light from the first mirror 9 in the case of the instant exemplary embodiment. When the second mirror 25 is inserted in the optical path, the reflected light therefrom is directed to the 35-mm film. When the mirror 25 is at the position retracted from the optical path, the reflected light from the first mirror follows the optical path loading to the film within the film pack.

To this end, the second mirror 25 is fixedly mounted on a mirror bracket 40 which is disposed rotatably about an axis 41 orthogonal to both the optical path of the reflected light and the optical path of luminous flux leading to the 35-mm film and which can be swung by a motor not shown between a position indicated by a broken line in the figure and a position indicated by a solid line where the mirror 25 bears against a stopper 42. When the second mirror 25 is at the position indicated by the broken line, that mirror is retracted from the path of the reflected luminous flux from the first mirror, whereby the luminous flux travels straightforwardly to be focused onto a film surface within the film pack holder 4 through the lens 10-1 or 10-2 and the third mirror 26 fixedly mounted at a predetermined position.

On the other hand, when the second mirror 25 is at the solid line position, the reflected luminous flux from the first mirror 9 is reflected by the second mirror 25 to be focused onto the 35-mm film surface through the lens 11-1 or 11-2.

The changing over of the paired lenses 10-1, 10-2 and 11-1, 11-2 for focusing light to the different films is realized by means of the turrets 12 and 13 as in the case of the first exemplary embodiment.

The action and effect of this embodiment are similar to those of the first exemplary embodiment."


INDUSTRIAL APPLICABILITY

As will be appreciated from the foregoing description, it is possible according to the present invention for any one to prepare slides and color diapositives for the overhead projector through simple manipulation as with the case of the copying machine. Further, because of the compact copier type, the apparatus is suited for use in offices. Besides, by virtue of such arrangement that the two independent optical paths can be exchangeably selected for use for the 35-mm film and the film pack, there is no need for replacing the holders for the 35-mm film and the film pack by each other, whereby unwanted exposure of the remaining film otherwise possibly occurring upon replacement of the films can be prevented.

CLAIMS

(1)     An image forming apparatus, characterized in that
the apparatus comprises a single original supporting
portion, a light source for illuminating an original
disposed on said portion, means for guiding light reflected
by the original illuminated by said light source selectively
to one of two optical paths, focusing optical systems
disposed in said two optical paths, respectively, for focusing
the light reflected by the original, and holding means for
holding removably two types of light sensitive materials
having sizes differing from each other at focusing positions
of the two focusing optical systems, respectively, wherein
image is formed selectively on either one of said two types
of light sensitive materials.

(2)     An image forming apparatus set forth in claim 1,
characterized in that said means for guiding light reflected
by the original to one of the two optical paths includes a
single mirror moved between two positions at which the light
reflected thereby coincide with said two optical paths,
respectively.

(3)     An image forming apparatus set forth in claim 1,
characterised in that said means for directing the reflected
light from the original selectively to one of two optical
paths is constituted by a single mirror inserted retractably in the optical path of the reflected light from the original, wherein the reflected light coinsides with one of said two optical paths when said mirror is inserted, while the optical path established when said mirror is retracted coincides with the other one of said two optical paths.

(4)     An image forming apparatus set forth in claim 1, characterized in that a mechanism required for forming an image onto said light sensitive material and a mechanism for feeding the light sensitive material can be operated in linkage with the operation for selecting the optical path.

# FIG.1

# FIG. 2

0252160

# FIG. 3

# FIG. 4

# FIG. 5

12'(13')

12(13)

10-2(11-2)

10-1(11-1)

27

F I G. 6

# F I G. 7

```
  ┌─────────────┐
  │  メイン SW-ON │ ──── Main switch is turned ON
  └─────────────┘
         │
  ┌─────────────┐
I │  イニシャライス゛ │ ──── Initialisation
  └─────────────┘
         │
  ┌─────────────┐
2 │   キー操作   │ ──── Key manipulation
  └─────────────┘
         │
        ╱╲
       ╱  ╲  ──── Is key operated?
      ╱キー操作╲  NO
      ╲あったか╱ ──── Arithmetic operation for driving motor
       ╲  ╱
        ╲╱ YES
  ┌─────────────┐
3 │  ヒータ駆動  │ ──── Status check
  │   演 算    │
  └─────────────┘
         │
  ┌──────┐  ┌──────┐
7 │コピー不可│ 4│ 状 態 │ ──── Display of inhibition of copy
  │ 表 示 │  │チェック│
  └──────┘  └──────┘
                │
              ╱╲
             ╱  ╲
         NG ╱条件判定╲ ──── Decision as to conditions
            ╲  ╱
             ╲╱ OK
  ┌─────────────┐
6 │  コピー可   │ ──── Display of copy being allowable
  │   表 示    │
  └─────────────┘
         │
        ╱╲
  OFF  ╱  ╲
 ─────╱ コピー╲ ──── Copy switch
       ╲ SW ╱
        ╲╱ ON
  ┌─────────────┐
9 │  コピー    │ ──── Copying operation
  │   動 作    │
  └─────────────┘
```

# F I G. 8

# F I G. 9

# F I G. 10

0252160

## I. CLASSIFICATION OF SUBJECT MATTER (if several classification symbols apply, indicate all)

According to International Patent Classification (IPC) or to both National Classification and IPC

Int.Cl⁴  G03B27/32

## II. FIELDS SEARCHED

### Minimum Documentation Searched

| Classification System | Classification Symbols |
|---|---|
| IPC | G03B27/32-27/40, 27/70, 21/28<br>G02B17/00-17/08 |

Documentation Searched other than Minimum Documentation
to the Extent that such Documents are Included in the Fields Searched

| | |
|---|---|
| Jitsuyo Shinan Koho | 1964 - 1986 |
| Kokai Jitsuyo Shinan Koho | 1971 - 1986 |

## III. DOCUMENTS CONSIDERED TO BE RELEVANT

| Category* | Citation of Document, with indication, where appropriate, of the relevant passages | Relevant to Claim No |
|---|---|---|
| Y | JP, A, 54-61527 (Fuji Photo Film Co., Ltd.) 17 May 1979 (17. 05. 79) Column 11, line 18 to column 13, line 9, Figs. 1 to 2 (Family: none) | 1, 2, 3 |
| Y | US, A, 4390270 (Agfa-Gevaert Aktiengesellshaft) 28 June 1983 (28. 06. 83) Column 3, lines 9 to 34 | 1, 2, 3 |

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| March 12, 1987 (12. 03. 87) | March 23, 1987 (23. 03. 87) |

| International Searching Authority | Signature of Authorized Officer |
|---|---|
| Japanese Patent Office | |

Form PCT/ISA/210 (second sheet) (October 1981)